# EUROPÄISCHE PATENTSCHRIFT

(11) **EP 3 127 686 B1**
(45) Veröffentlichungstag und Bekanntmachung des Hinweises auf die Patenterteilung: **07.12.2022**
(21) Anmeldenummer: 16173318.3
(22) Anmeldetag: 07.06.2016
(51) Int. Cl.: B29C 70/52, B29C 70/54, B29C 70/48, F03D 1/06

(54) **VERFAHREN ZUR HERSTELLUNG EINES BAUTEILS EINES ROTORBLATTES EINER WINDENERGIEANLAGE**
METHOD FOR PRODUCING A COMPONENT OF A ROTOR BLADE OF A WIND TURBINE
PROCEDE DE FABRICATION D'UN COMPOSANT D'UNE PALE DE ROTOR D'UNE EOLIENNE

(30) Priorität: 19.06.2015 DE 102015007801
(43) Veröffentlichungstag der Anmeldung: 08.02.2017
(73) Patentinhaber: Siemens Gamesa Renewable Energy Service GmbH, 20097 Hamburg (DE)
(72) Erfinder: Petsche, Marc, 24809 Nübbel (DE); Eyb, Enno, 24116 Kiel (DE)
(74) Vertreter: Groth, Wieland

(56) Entgegenhaltungen:
- EP-A1- 0 525 263
- WO-A1-03/008800
- WO-A1-2014/079456
- WO-A1-2015/058775
- US-A1- 2007 040 294
- US-A1- 2014 003 955

## Beschreibung

Die Erfindung betrifft ein Verfahren zur Fertigung eines Bauteils eines Rotorblattes einer Windenergieanlage. Die Erfindung betrifft auch ein Bauteil eines Rotorblattes einer Windenergieanlage.

Aus der WO 2012/024377 A1 ist ein Apparat bekannt mit dem ein Prepreg-Produkt auf eine gekrümmte Fläche aufgebracht werden kann, wobei in dem Prepreg-Produkt ein geringerer Faltenwurf auf dem Innenradius ausgebildet wird.

In der WO 2014/0442 80 A1 ist ein Verfahren zur Herstellung eines Rotorblattes offenbart, bei dem wenigstens ein Pultrudatstreifen in eine Rotorblattschale integriert ist. Dabei verlaufen die Pultrudatstreifen entlang der Längsrichtung der Rotorblattschale. Verfahrensgemäß werden die Pultrudatstreifen in einem Harzinfusionsverfahren mit Glasfaserschichten verklebt.

In der US 2007/040294 A1 ist ein Verfahren zur Herstellung eines Laminates für Gurte von Windenergieanlagen bekannt, bei dem Fasern in ein Matrixmaterial eingebettet werden und dann auf sich gegenüberliegende Außenflächen des ausgehärteten Laminates Kanäle verschiedener Ausrichtung eingefräst werden.

Die Pultrudate selbst sind nicht klebend. Pultrudate werden üblicherweise miteinander verklebt, indem Pultrudatschichten mittels Fließhilfen oder durch Einbringung vorgetränkter Gewebelagen zwischen den Pultrudatlagen verklebt werden. Sowohl die Fließhilfen als auch Prepreglagen verringern jedoch die Stabilität des Pultrudatstapels. Derartige Konstruktionen sind daher insbesondere für die Herstellung von Bauteilen von Rotorblättern von Windenergieanlagen, insbesondere von Gurten eines Rotorblattes nur bedingt geeignet.

WO 2015/058775 A1 offenbart die Oberbegriffe der Ansprüche 1, 2.

Es ist Aufgabe der vorliegenden Erfindung, ein Verfahren zur Herstellung eines Bauteils, insbesondere eines Gurtes eines Rotorblattes einer Windenergieanlage zur Verfügung zu stellen, das die oben genannten Nachteile vermeidet.

Es ist weiterhin Aufgabe der vorliegenden Erfindung, ein Bauteil eines Rotorblattes zur Verfügung zu stellen.

In ihrem ersten Aspekt wird die Erfindung durch ein Verfahren mit den Merkmalen des Anspruchs 1 gelöst.

Das erfindungsgemäße Verfahren zur Fertigung eines Bauteils eines Rotorblattes einer Windenergieanlage ist insbesondere zur Fertigung von Gurten eines Rotorblattes einer Windenergieanlage geeignet. Bei dem Bauteil handelt es sich um ein in der Regel aus mehreren Schichten aufgebautes flächiges Faserverbundkunststoffprofil, dessen Länge und Höhe um das Mehrfache größer ist als dessen Breite. Die Schichten können eine oder mehrere Gewebelagen, Faserlagen aus jeweils unterschiedlichen Materialien umfassen, insbesondere können einige Gewebelagen auch Kohlenstofffasern aufweisen, die bei niedrigem Gewicht eine besonders hohe Beständigkeit gegen Umwelteinflüsse und Chemikalien aufweisen. Kohlenstofffasern sind sehr temperaturbeständig und weisen günstige mechanische Eigenschaften auf.

Wenigstens eine der Schichten weist einen Pultrudatstreifen auf. Der Pultrudatstreifen selbst ist ein vorzugsweise mehrere Gewebelagen oder Faserlagen aufweisendes Faserverbundkunststoffprofil, das in einem Strangziehverfahren hergestellt wird. Der Pultrudatstreifen wird mit präzise auf den Verwendungszweck abgestimmtem Querschnitt und Materialeigenschaften gefertigt, wobei ein Armierungsmaterial, das beispielsweise Kunststofffäden oder Garne aufweisen kann, aber auch Gewebelagen, Matten oder Fasern aufweisen kann, durch eine Injektionseinrichtung geführt wird, in der die Armierungsmaterialien mit einem Matrixmaterial imprägniert werden. Bei dem Matrixmaterial handelt es sich um einen Harz- vorzugsweise um einen Zweikomponentenharz-, der in einem Injektions- vorzugsweise Infusionsverfahren den Armierungsmaterialien zugeführt wird und nach dem Aushärten in gewünschte Längen geschnitten wird.

Der Pultrudatstreifen weist zwei sich gegenüberliegende Auflageseiten auf, die deutlich, d. h. um das Vielfache, größer als Außenflächen einer ersten oder zweiten Längsseite oder von Querseiten des Pultrudatstreifens sind.

Der Pultrudatstreifen wird wenigstens mit zwei sich gegenüberliegenden Auflageseiten an wenigstens einer der Auflageseiten mit einem Abreißgewebe beschichtet. Dann wird das Abreißgewebe von der wenigstens einen Auflageseite abgerissen. Das abgerissene Abreißgewebe hinterlässt vorzugsweise langgestreckte Fließkanäle auf der wenigstens einen Auflageseite. Die Fließkanäle sind so bemessen, dass flüssiges Harz durch die Fließkanäle infundiert wird.

Erfindungsgemäß wird ein Abreißgewebe mit langgestreckten Erhebungen versehen, und wenigstens eine der Auflageseiten des Pultrudatstreifens wird mit dem Abreißgewebe beschichtet. Die Beschichtung kann während des Injektionsverfahrens zur Herstellung des Pultrudatstreifens, noch bevor der Pultrudatstreifen ausgehärtet ist, erfolgen. Das Abreißgewebe weist langgestreckte Erhebungen auf, auf die wenigstens eine Auflageseite langestreckte Fließkanäle einformen. Nach dem Aushärten des Pultrudatstreifens wird das Abreißgewebe von der wenigstens einen Auflageseite abgerissen und hinterlässt die langgestreckten Fließkanäle auf der Auflageseite. Durch die Fließkanäle wird Harz infundiert, wenn aus dem Pultrudatstreifen oder mit Hilfe des Pultrudatstreifens das Bauteil des Rotorblattes der Windenergieanlage hergestellt wird.

Bei einem Abreißgewebe handelt es sich generell um ein feines Gewebe, das als letzte Schicht in einem Laminiervorgang aufgebracht wird. Abreißgewebe lassen sich einfach von dem ausgehärteten Laminat abziehen und hinterlassen eine raue und saubere Oberfläche. Die Oberfläche ist dann ideal für die Weiterverarbeitung, beispielsweise das Aufkleben weiterer Schichten, Verspachtelungen oder Lackierungen, vorbereitet und benötigt keine weitere Schleifbehandlung. Abreißgewebe sind vorzugsweise aus Nylon oder Polyesterfasern hergestellt. Am weitesten verbreitet sind Nylonfasern. Bei der Verwendung von auf Phenol basierenden Harzsystemen werden jedoch auch Polyesterfasern als Abreißgewebe eingesetzt. Die Abreißgewebe haben verschweißte Kanten, um ein Ausfransen zu verhindern.

Das Abreißgewebe ist jedoch in den beiden Flächenrichtungen entlang seiner Länge und Breite nicht gleich ausgebildet, sondern das Abreißgewebe ist mit langgestreckten Erhebungen versehen, die vorzugsweise nur im Wesentlichen linear entlang der Längsrichtung oder vorzugsweise nur senkrecht zur Längsrichtung, nämlich entlang der Breite des Abreißgewebes verlaufen. Die Erhebungen verlaufen vorzugsweise entlang der gesamten Länge oder der gesamten Breite des Abreißgewebes, sodass sich die durch die Erhebungen des Abreißgewebes in die wenigstens eine Auflageseite des Bauteils eingeformten Fließkanäle ebenfalls über die gesamte Breite des Bauteils oder die gesamte Länge des Bauteils erstrecken. Sie können sich auch in einem Winkel von einer zu einer anderen Längsseite des Bauteils erstrecken. Die Fließkanäle sind an ihren Enden offen und ermöglichen somit einen Harzdurchfluss von einer Seite, vorzugsweise der einen Längsseite des Bauteils, zur anderen Seite, vorzugsweise der anderen Längsseite des Bauteils, ermöglichen.

Vorzugsweise ist das Abreißgewebe aus unterschiedlich dicken Garnen gefertigt, wobei die dicken Garne vorzugsweise den doppelten, dreifachen oder vierfachen Durchmesser der dünneren Garne aufweisen und die dicken Garne die Erhebungen ausbilden, die die Fließkanäle in die wenigstens eine Auflageseite einformen. Die dickeren Garne müssen nicht notwendigerweise linear entlang einer Richtung verlaufen, es sind durchaus auch in der Fläche geschwungene oder kurvenförmige Garnführungen möglich.

Die dickeren Garne verlaufen jedoch vorzugsweise entlang des Abreißgewebes in einer gleichbleibenden Höhe über eine Ebene des Abreißgewebes, die durch die dünneren Garne gebildet wird, und sie sind nicht durch andere Gewebelagen in das Abreißgewebe hinein- und wieder hinausgeführt, weil durch einen derartigen im Querschnitt senkrecht zur Ebene des Abreißgewebes wellenförmigen Verlauf des dickeren Garnes keine durchgehenden langgestreckten Erhebungen ausgebildet werden, die sich dann als Fließkanäle in die Oberflächen des Pultrudatstreifens einformen.

Der wenigstens eine Pultrudatstreifen wird an einer ersten Auflageseite mit einem ersten Abreißgewebe mit langgestreckten Erhebungen versehen, die beim Abreißen erste Fließkanäle auf der ersten Auflagefläche hinterlassen und optional auf einer zweiten Auflageseite mit einem zweiten Abreißgewebe mit zweiten langgestreckten Erhebungen versehen, die beim Abreißen zweite Fließkanäle auf der zweiten Auflagefläche hinterlassen.

Bei dieser Ausführungsform sind beide Auflageseiten des Pultrudatstreifens mit Fließkanälen versehen, sodass mehrere Pultrudatstreifen mit jeweils ersten und zweiten Fließkanälen nach der Fertigung aufeinandergestapelt werden und somit ein dickeres Faserverbundkunststoffprofil ausbilden. Durch die zwischen den einzelnen Pultrudatstreifen ausgebildeten Fließkanäle wird in einem Infusionsverfahren Harz infundiert, der vorzugweise in die Pultrudatstreifen infundiert wird und insbesondere die Pultrudatstreifen miteinander verklebt.

Auch zur Herstellung des Bauteils aus dem Bauteilhalbzeug wird, wie bei der Herstellung der Pultrudatstreifen selbst, vorzugsweise ein Zweikomponentenharz verwendet. Dabei kann es notwendig sein, während des Aushärtevorganges dem Pultrudatstreifens oder dem Bauteilhalbzeug zusätzlich Wärme zuzuführen, nachdem ein exothermer Peak überschritten wurde.

Beim Aufeinanderstapeln der Pultrudatstreifen berühren sich vorzugsweise erste und zweite Auflageseiten benachbarter Pultrudatstreifen, dabei sind die ersten und zweiten Fließkanäle, die sich nach dem Abreißen des ersten bzw. zweiten Abreißgewebes auf der ersten bzw. zweiten Auflageseite ausbilden, so angeordnet, dass sie beim Aufeinanderlegen der Pultrudatstreifen nicht ineinander verhaken. Vorzugsweise sind die ersten Fließkanäle parallel zueinander und quer zu einer Längsrichtung des wenigstens einen Pultrudatstreifens angeordnet und die zweiten Fließkanäle werden in Längsrichtung des Pultrudatstreifens angeordnet. Es sind jedoch auch andere Anordnungen der ersten und zweiten Fließkanäle denkbar.

Das wenigstens eine Abreißgewebe kann als erstes Abreißgewebe mit quer zur Längsrichtung verlaufenden dickeren Garnen auf die erste Auflageseite und als zweites Abreißgewebe mit in Längsrichtung verlaufenden dickeren Garnen auf die zweite Auflageseite beschichtet werden.

Dabei ist es möglich, ein einziges Abreißgewebe zu fertigen und das Abreißgewebe zur Ausbildung des ersten Abreißgewebes so zu schneiden, dass die dickeren Garne in Längsrichtung verlaufen und dasselbe Abreißgewebe zur Ausbildung des zweiten Abreißgewebes so zu schneiden, dass die dickeren Garne quer zur Längsrichtung verlaufen. Natürlich ist es auch möglich, erste und zweite Abreißgewebe als unterschiedliche Abreißgewebe zu fertigen.

Das erfindungsgemäße Verfahren eignet sich insbesondere zur Herstellung eines Gurtes eines Rotorblattes einer Windenergieanlage. Es ist jedoch auch geeignet, andere Bauteile des Rotorblattes von Windenergieanlagen, wie beispielsweise die Halbschalen oder Stege, insbesondere den Hauptsteg, zu fertigen.

Es können mehrere Pultrudatstreifen mit Fließkanälen gefertigt werden, die mehreren Pultrudatstreifen aufeinandergestapelt werden, indem sich erste und zweite Auflageseiten benachbarter Pultrudatstreifen unmittelbar berühren und Fließkanäle vollständig durch den Stapel Pultrudatstreifen hindurch geführt werden. Günstigerweise werden die Pultrudatstreifen so miteinander verklebt ohne weitere Fließhilfen zwischen den Pultrudatstreifen zu verwenden.

Ein Stapel Pultrudatstreifen kann mit Harz infundiert werden, indem der Stapel in eine Fertigungsform gelegt und unter Unterdruck gesetzt wird. Dabei können zunächst bekannte Infusionsverfahren verwendet werden. Vorzugsweise wird hier jedoch entlang von Längsseiten des Stapels Pultrudatstreifen jeweils ein Kernmaterialstreifen mit einer Fräsung eingesetzt, die eine Harzverteilung entlang einer Breite des Stapels ermöglicht. Es kann eine Außenseite des Stapels Pultrudatstreifen gegen Harzdurchtritt abgedichtet werden, indem das Abreißgewebe während der Infusion mit Harz auf den Außenseiten des Stapels verbleibt. Zur verbesserten Verteilung des Harzes wird vorzugsweise der Stapel Pultrudatstreifen auf ein Fließgelege aufgelegt.

Die Aufgabe wird in ihrem zweiten Aspekt durch ein Bauteil gemäß Anspruch 2 gelöst.

Der Pultrudatstreifen eignet sich insbesondere zur Anwendung in einem der vorgenannten Verfahren.

Das Abreißgewebe wird mit langgestreckten Erhebungen versehen und die langgestreckten Erhebungen des Abreißgewebes formen langgestreckte Fließkanäle in die eine Auflageseite ein. Kostengünstig werden die Erhebungen durch dicke Garne gebildet, die sich über eine aus dünnen Garnen gebildete Ebene des Abreißgewebes erheben.

Eine erste Auflageseite wird mit einem ersten Abreißgewebe mit ersten langgestreckten Erhebungen versehen, die beim Abreißen erste Fließkanäle auf der ersten Auflageseite hinterlassen, und eine zweite Auflageseite kann mit einem zweiten Abreißgewebe mit zweiten langgestreckten Erhebungen versehen sein, die beim Abreißen zweite Fließkanäle auf der zweiten Auflageseite hinterlassen, und die ersten und zweiten Fließkanäle weisen verschiedene Muster auf.

Die verschiedenen Muster können derart ausgebildet sein, dass erste Fließkanäle nebeneinander angeordnet in Längsrichtung des Pultrudatstreifens verlaufen und die zweiten Fließkanäle nebeneinander angeordnet quer zur Längsrichtung verlaufen. Die ersten Fließkanäle können günstigerweise gerade von der einen zur anderen Längsseite des Pultrudatstreifens verlaufen und die zweiten Fließkanäle gerade nebeneinander entlang der Längsrichtung des Pultrudatstreifens.

Eine Anordnung mit einer Fertigungsform und einem Bauteilhalbzeug zur Fertigung eines Bauteils eines Rotorblattes einer Windenergieanlage kann zur Verfügung gestellt werden, wobei das Bauteilhalbzeug auf die Auflagefläche der Fertigungsform aufgelegt ist und das Bauteilhalbzeug einen Stapel von Pultrudatstreifen mit quer zur Längsrichtung verlaufenden Fließkanälen umfasst.

Die Fließkanäle können vollständig von einer ersten zu einer zweiten Längsseite durch das Bauteilhalbzeug hindurch verlaufen und sind sowohl an der ersten als auch an der zweiten Längsseite offen, sodass sie für den Durchtritt von flüssigem Harz geeignet sind.

Entlang von seitlichen Rändern des Bauteilhalbzeugs können Kernmaterialstreifen angeordnet sein, mit quer zur Längsrichtung in das Kernmaterial an der dem Bauteilhalbzeug zugewandten Außenseite eingebrachter Fräsung.

Die Fräsung gestattet es, auf einer Seite auf das Kernmaterial aufgebrachtes Harz entlang der seitlichen Ränder des Bauteilhalbzeuges zu verteilen und zwischen unterschiedlichen Pultrudatstreifen in die Fließkanäle einlaufen zu lassen.

Die Fräsung braucht den Kernmaterialstreifen nicht vollständig durchlaufen, um ihm eine hinreichende Stabilität zu geben.

Die Kernmaterialstreifen können in Längsrichtung verlaufende fertigungsformabseitig in das Kernmaterial eingebrachte Fließkanäle aufweisen, die es dem Harz gestatten, in Längsrichtung entlang des Bauteilhalbzeugs zu verlaufen.

Zwischen dem Bauteilhalbzeug und der Auflagefläche können Fließhilfen angeordnet sein, vorzugsweise ist eine Fließhilfe angeordnet, die den Durchtritt des Harzes unter dem Bauteilhalbzeug hindurch befördert.

Das-Bauteilhalbzeug kann auflagenflächenabseitig mit einer gasdichten Membran abgedichtet sein und zwischen der gasdichten Membran und dem Bauteilhalbzeug kann eine semipermeable Membran angeordnet sein. Die gasdichte Membran ermöglicht es, zwischen der Auflagefläche und der gasdichten Membran einen Unterdruck auszubilden, der es gestattet, Harz in einem Infusionsverfahren aus Zulauföffnungen in den Zwischenraum zwischen Auflagefläche und gasdichter Membran einzusaugen und damit das Harz in die Fließkanäle des Bauteilhalbzeuges einzusaugen. Dabei sind auf der vorzugsweise den Zulauföffnungen gegenüberliegenden Seite am Bauteilhalbzeug Ablauföffnungen für das überschüssige Harz angeordnet, über die zunächst Luft aus dem Bauteilhalbzeug abgesaugt wird, und durch den sich ausbildenden Unterdruck wird das flüssige Harz über die Zulauföffnungen eingesogen.

Die so herstellbaren Bauteile, insbesondere Gurte oder Stege für Rotorblätter einer Windenergieanlage, sind bis zu 50 m, vorzugsweise 60 m lang. Es sind natürlich auch kürzere Bauteile herstellbar. Die verwendeten Pultrudatstreifen weisen ebenfalls bis zu 60 m Länge auf. Die Dicke der Gurte nimmt zur Rotorblattspitze hin ab, sodass die aufeinandergestapelten Pultrudatstreifen unterschiedliche Längen aufweisen, um damit eine Dickenabnahme des Bauteils zu ermöglichen.

Zur Herstellung des Bauteils wird zunächst die Fertigungsform mit ihrer Auflagefläche zur Verfügung gestellt und das Bauteilhalbzeug mit den vorgegeben Außenmaßen auf die Auflagefläche aufgelegt. Es handelt sich bei dem Bauteilhalbzeug um einen Stapel von Pultrudatstreifen mit in die Pultrudatstreifen eingebrachten Fließkanälen. Nach dem Auflegen des Bauteilhalbzeugs auf die Auflagefläche der Fertigungsform wird auf der der Auflagefläche abgewandten Seite eine gasdichte Membran entlang von Rändern der Fertigungsform angeklebt, die das gesamte Bauteilhalbzeug überdeckt und somit zwischen der Auflagefläche und der Membran einen gasdichten Raum ausbildet, der durch die Auslassöffnungen mit Unterdruck beaufschlagt wird und dadurch das Harz über Einlassöffnungen in den Unterdruckbereich einsaugt. Das sich über die Kernmaterialstreifen verteilende Harz gelangt entlang des Randes des Bauteilhalbzeugs in die Öffnungen der Fließkanäle und wird dort in die Fließkanäle eingesaugt. Das Harz kann zwischen den einzelnen Pultrudatstreifen verlaufen und auch in die Pultrudatstreifen hinein verlaufen, soweit diese noch nicht vollständig infundiert und ausgehärtet sind. Nach der vollständigen Durchtränkung des Bauteilhalbzeugs mit flüssigem Harz wird die Infusion beendet und das Harz kann, soweit es sich beispielsweise um ein Zweikomponentenharz handelt, zusätzlich mit Wärme versorgt werden, um auszuhärten. Dabei können entlang der Fertigungsform verschiedene Heizmittel angeordnet sein, die individuell angesteuert werden können, um eine möglichst gleichmäßige Erwärmung des Bauteilhalbzeugs über seine gesamte Längs- und Höhenausdehnung zu ermöglichen.

Wenn das erfindungsgemäße Fertigungsverfahren zur Herstellung von Rotorblättern verwendet wird, ist zu beachten, dass diese aus zwei Rotorblatthalbschalen zusammengesetzt werden und dass vorzugsweise jede der beiden Rotorblatthalbschalen separat in einer eigenen Fertigungsform gefertigt wird. Die Gurte und/oder Stege können gemäß einem der oben genannten Verfahren gefertigt werden, in die Rotorblatthalbschalen innen in Längsrichtung zur Rotorblattspitze hin dünner werdend eingeklebt werden und dann überlaminiert werden, um eine bessere Verbindung mit der Rotorblatthalbschale zu erreichen.

Nach vollständiger Herstellung der Rotorblatthalbschalen werden die parallel aneinander gefahrenen Fertigungsformen aufeinander geklappt, sodass die beiden Rotorblatthalbschalen an ihren Rändern exakt aufeinander zum Liegen kommen und dann entlang ihrer Ränder verklebt werden. Dabei ist darauf zu achten, dass die Fertigungsformen nach dem Abnehmen der gasdichten Folie ein Umklappen mit der Rotorblatthalbschale ermöglichen. Da es sich bei den Rotorblatthalbschalen um bis zu 60 m lange Objekte handelt, ist ein nicht ganz unerheblicher Aufwand erforderlich.

Die Erfindung wird anhand eines Ausführungsbeispiels in vier Figuren beschrieben, dabei zeigen:
- Fig. 1: eine schematische Ansicht einer Pultrusionsmaschine,
- Fig. 2: eine Schnittansicht eines Abschnitts eines Pultrudatstreifens mit Abreißgewebe,
- Fig. 3: eine Schnittansicht des Pultrudatstreifens in Fig. 2 ohne Abreißgewebe,
- Fig. 4: eine Schnittansicht einer erfindungsgemäßen Anordnung aus einer Herstellungsform und einem Gurthalbzeug.

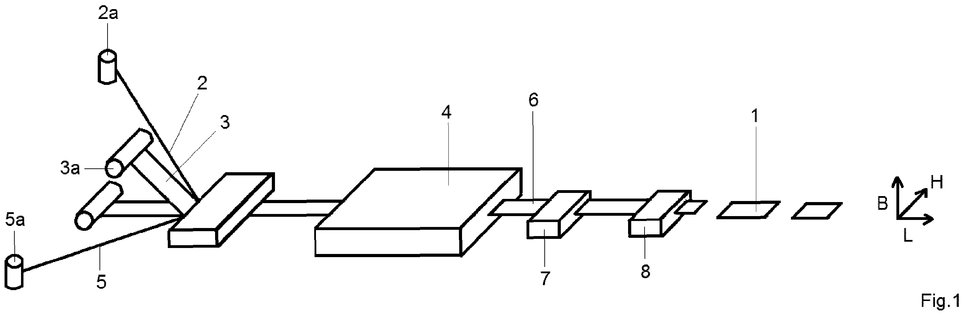

Fig. 1 zeigt in schematischer Ansicht eine Pultrusionsmaschine zur Durchführung eines Verfahrens zur Herstellung eines Pultrudates, wie es beispielsweise von der *Fiberline Composites A*/*S* benutzt wird. Pultrudate werden in einem Pultrusionsverfahren hergestellt. Man spricht anstatt von Pultrusionsverfahren auch von Strangziehverfahren.

Bei Pultrudaten handelt es sich um stranggezogene Faserverbundkunststoffprofile. Zu ihrer Herstellung werden zunächst ein oder mehrere Armierungsmaterialien 2, 3, 5 die auf Rollen 2a, 3a, 5a aufgewickelt sind, zur Verfügung gestellt. Bei den Armierungsmaterialien 2, 3, 5 kann es sich um eindimensionale Garne, Fäden 2 wie auch um zweidimensionale Faser- oder Gewebelagen oder Matten oder um ein erstes und ein zweites Abreißgewebe 3, 5 handeln. Das Armierungsmaterial 2, 3, 5 kann von Kohlefaserfäden durchzogen sein oder sogar aus ihnen bestehen. Das Armierungsmaterial 2, 3, 5 wird während des Herstellungsverfahrens des Pultrudates kontinuierlich von den Armierungsmaterialien 2, 3, 5 zugeordneten Rollen 2a, 3a, 5a abgezogen. Die Armierungsmaterialen 2, 3, 5 werden in vorbestimmter Weise zusammengeführt, geheizt und durch eine Injektionseinrichtung 4 geführt. In der Injektionseinrichtung 4 wird flüssiges Harz in das zusammengeführte Armierungsmaterial 2, 3, 5 injiziert. Bei dem verwendeten Harz kann es sich um ein herkömmliches Zweikomponentenharz handeln, dem zum Aushärten nach Durchschreiten eines sogenannten exothermen Peaks von außen Wärme zusätzlich zugeführt werden muss. Der exotherme Peak liegt bei Harzen mit niedriger Exothermieentwicklung bei 40 °C bis 120 °C und üblicherweise bei ca. 180 °C. Nach Durchschreiten des exothermen Peaks nimmt die Wärmeentwicklung wieder ab, zum vollständigen Aushärten bedarf es einer nachfolgenden externen Wärmezufuhr.

Das Pultrudat kann teilweise oder vollständig ausgehärtet sein, wenn es die Injektionseinrichtung 4 als streifenförmige Pultrudatbahn 6 verlässt. Es sind natürlich auch andere Querschnittsformen als die im Wesentlichen flache Rechteckform eines Streifens denkbar. Die Pultrudatbahn 6 wird aus der Injektionseinrichtung 4 mit einem Abzieher 7 herausgezogen und anschließend mit einer mitwandernden Säge 8 in benötigte Streifenlängen geschnitten. So gefertigte Pultrudatstreifen 1 weisen in einer Längsrichtung L eine Längenausdehnung auf, die um ein Vielfaches größer ist als eine Ausdehnung des Pultrudatstreifens 1 entlang einer Breite B oder einer Höhe H.

Grundsätzlich kann die Pultrudatbahn 6 auch erst aufgerollt werden und erst am Ort der Weiterverarbeitung der Pultrudatbahn 6 kann deren Zuschnitt mit einer Säge 8 erfolgen. Pultrudatbahnen 6 sind auch im ausgehärteten Zustand biegsam, zumindest so biegsam, dass sie auf Rollen aufgewickelt werden können und so leichter transportiert werden können.

Bei den ersten und zweiten Abreißgeweben 3, 5 handelt es jeweils sich um eine Gewebelage, die als äußerste Lage üblicherweise in einem Laminiervorgang auf die Pultrudatbahn 6 aufgebracht werden. Ein erstes Abreißgewebe 3 wird auf eine erste Auflageseite 17 der Pultrudatbahn 6 und ein zweites Abreißgewebe 5 auf eine zweite Auflageseite 20 der Pultrudatbahn 6 laminiert. Die ersten und zweiten Abreißgewebe 3, 5 lassen sich einfach von dem ausgehärteten und abgelängten Pultrudatstreifen 1 abziehen. Sie hinterlassen eine raue, aber saubere erste bzw. zweite Auflageseite 17, 20 auf dem Pultrudatstreifen 1, die dann einer direkten Weiterbearbeitung zugeführt werden kann. Üblicherweise werden erste und zweite Abreißgewebe 3, 5 aus Nylon oder Polyesterfasern hergestellt. Vorzugsweise werden Nylonfasern eingesetzt. Wenn jedoch auf Phenol basierende Harzsysteme bei der Herstellung des Pultrudatstreifens 1 verwendet werden, bestehen die Abreißgewebe 3, 5 vorzugsweise aus Polyesterfäden, da diese phenolresistenter sind. Das erste und das zweite Abreißgewebe 3, 5 werden bahnförmig auf Rollen 3a, 5a aufgerollt zur Verfügung gestellt.

Die ersten und zweiten Abreißgewebe 3, 5 weisen vorzugsweise verschweißte Kanten auf, um ein Ausfransen zu verhindern. Das erste und das zweite Abreißgewebe 3, 5 nehmen während des Laminiervorgangs auf die Auflageseiten 17, 20 einen Teil des Harzes aus dem Laminat auf.

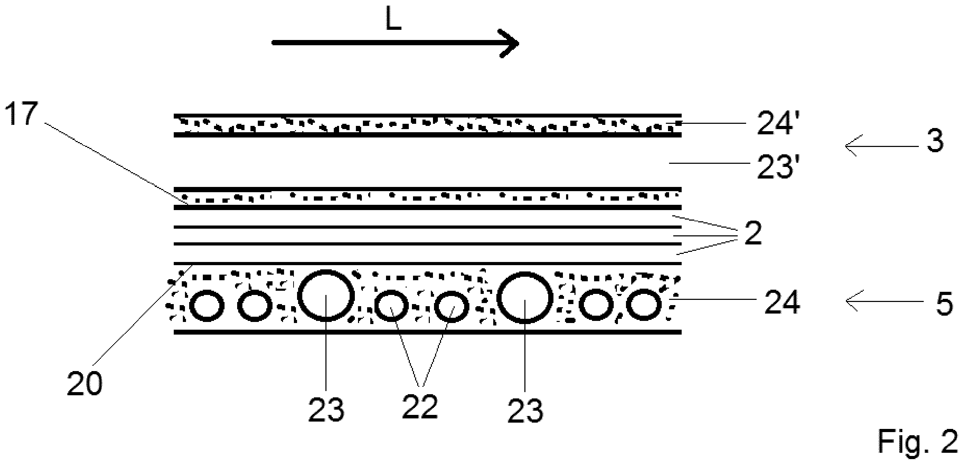

Fig. 2 zeigt einen Pultrudatstreifen 1 mit drei Lagen, Fasern 2 oder Gewebe und dem ersten Abreißgewebe 3 und dem zweiten Abreißgewebe 5. Fig. 2 zeigt in einem Querschnitt in einer Längsrichtung L einen Abschnitt der gemäß Fig. 1 hergestellten Pultrudatbahn 1 mit dem auf der ersten Auflageseite 17 aufgebrachten ersten Abreißgewebe 3 und dem auf der zweiten Auflageseite 20 aufgebrachten zweiten Abreißgewebe 5. Das erste Abreißgewebe 3 weisen nebeneinander angeordnete erste Garne 22', 23' zweier unterschiedlicher Dicke auf und das zweite Abreißgewebe 5 weist ebenfalls nebeneinander angeordnete zweite Garne 22, 23 zweier unterschiedlicher Dicken auf. Die im Querschnitt dicken zweiten Garne 23 bilden quer zur Längsrichtung L verlaufende langgestreckte Erhebungen gegenüber einer durch die dünnen zweiten Garne 22 gebildeten Ebene des zweiten Abreißgewebes 5 aus. Die ersten und zweiten Abreißgewebe 3, 5 werden mit den Erhebungen dem Pultrudatstreifen 1 zugewandt auf die erste bzw. zweite Auflagefläche 17, 10 laminiert. Die dicken ersten Garne 23' bilden entsprechend quer zur Längsrichtung L verlaufende langgestreckte Erhebungen gegenüber der durch die dünnen ersten Garne 22' gebildeten Ebene des zweiten Abreißgewebes 5 aus.

Das erste und das zweite Abreißgewebe 3, 5 werden im Laminierverfahren mittels eines als Matrixmaterial 24, 24' dienenden Harzes auf die Schichten von Fasern 2 laminiert, und nach dem Laminieren härtet der mit dem ersten und zweiten Abreißgewebe 3, 5 gemäß Fig. 2 versehene Pultrudatstreifen 1 aus. Danach werden das erste und das zweite Abreißgewebe 3, 5 gleichzeitig oder in beliebiger Reihenfolge nacheinander vom Pultrudatstreifen 1 abgezogen.

Dabei ist die Klebstärke zwischen der ersten Auflagefläche 17 und dem Matrixmaterial 24' stärker als die Reißfestigkeit des Matrixmaterials 24', wodurch das Matrixmaterial 24' in einer Ebene des zweiten Abreißgewebes 5 aufreißt und das zweite Abreißgewebe 5 einen Teil des an der zweiten Auflageseite 20 aufgebrachten Matrixmaterials 24 mitnimmt und ein anderer Teil des Matrixmaterials 24 auf der zweiten Auflagefläche 20 verbleibt. In dem anderen Teil des Matrixmaterials 24 sind die zweiten Fließkanäle 26 eingeformt.

Die Klebstärke zwischen der zweiten Auflagefläche 20 und dem Matrixmaterial 24 ist entsprechend stärker als die Reißfestigkeit des Matrixmaterials 24, wodurch das Matrixmaterial 24' in einer Ebene des ersten Abreisgewebes 3 aufreißt und das erste Abreißgewebe 3 einen Teil des an der ersten Auflageseite 17 aufgebrachten Matrixmateriales 24' mitnimmt und ein anderer Teil des Matrixmaterials 24' auf der ersten Auflagefläche 17 verbleibt. In dem anderen Teil des Matrixmaterials 24' sind die ersten Fließkanäle 26' eingeformt.

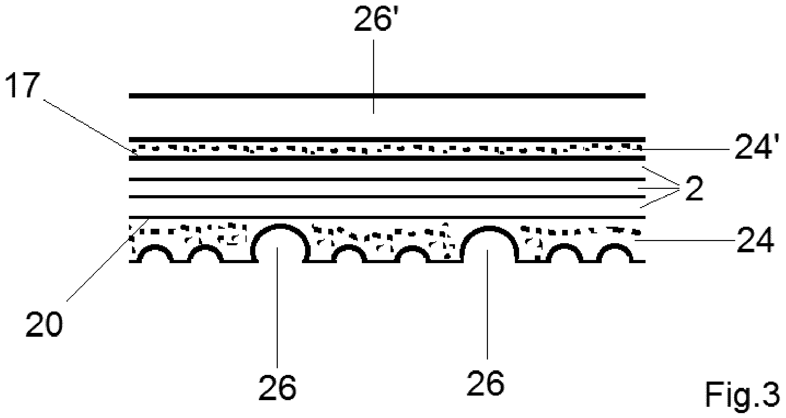

Fig. 3 zeigt den auf der ersten und der zweiten Auflageseite 17, 20 des Pultrudatstreifens 1 verbleibenden jeweils anderen Teil des Matrixmaterials 24', 24, nachdem das erste Abreißgewebe 3 und das zweite Abreißgewebe 5 mit jeweils dem einen Teil des Matrixmaterials 24', 24 abgerissen sind.

Insbesondere umfasst der Pultrudatstreifen 1 gemäß Fig. 3 an der zweiten Auflageseite 20 quer zur Längsrichtung L verlaufende zweite Fließkanäle 26. Die zweiten Fließkanäle 26 waren vor dem Abreißen des zweiten Abreißgewebes 5 mit den dickeren Garnen 23 ausgefüllt und werden durch das Ablösen des zweiten Abreißgewebes 5 freigelegt.

Der Pultrudatstreifen 1 weist an der ersten Auflageseite 17 in Längsrichtung L verlaufende erste Fließkanäle 26' auf, die vor dem Abreißen des ersten Abreißgewebes 3 von dessen dicken ersten Garnen 23' gefüllt waren.

Das Abreißgewebe 3, 5 kann beispielsweise aus einem Gewebe bestehen, das entlang einer Richtung parallel zueinander angeordnete dicke Garne 23, 23' aufweist, zwischen denen eine größere Anzahl von dünneren Garnen 22, 22', die parallel zueinander und parallel zu den dickeren Garnen 23, 23' verlaufen, angeordnet sind. Die dünneren Garne 22, 22' weisen untereinander und entlang ihrer Längsausdehnung denselben Durchmesser auf und die dicken Garne 23, 23' weisen ebenfalls untereinander und entlang ihrer Längsrichtung denselben Durchmesser auf.

Die dickeren Garne 23', 23 bilden Erhebungen über einer ersten bzw. zweiten Ebene des zweiten bzw. ersten Abreißgewebes 5, 3 aus, die die zweiten bzw. ersten Fließkanäle 26, 26' in das zweite bzw. erste Matrixmaterial 24, 24' einformen. Die erste bzw. zweite Ebene wird durch die jeweiligen dünneren Garne 22, 22' gebildet. Die dünneren Garne 22, 22' verlaufen nebeneinander auf und bilden eine Ebene aus, von der die dickeren Garne 23, 23' alle auf derselben Seite der Ebene als Erhebungen herausstehen.

Fig. 3 zeigt einen Pultrudatstreifen 1 im Querschnitt in Längsrichtung L mit einem ersten und einem zweiten bereits abgerissenen Abreißgewebe 3, 5. Dabei ist die Richtung der durch das erste Abreißgewebe 3 auf der ersten Auflageseite 17 erzeugten ersten Fließkanäle 26' und die Richtung der durch das zweite Abreißgewebe 5 auf der zweiten Auflageseite 20 erzeugten zweiten Fließkanäle 26 voneinander verschieden, vorliegend senkrecht zueinander, sodass sich die ersten Fließkanäle 26' auf der ersten Auflageseite 17 nicht mit den zweiten Fließkanälen 26 und auf der zweiten Auflageseite 20 beim Stapeln der Pultrudatstreifen 1 ineinander verhaken.

Aus den Pultrudatstreifen 1 können unterschiedliche Bauteile des Rotorblattes einer Windenergieanlage gefertigt werden, insbesondere Rotorblatthalbschalen oder Teile davon oder wie im vorliegenden Ausführungsbeispiel Gurte, in Form von Haupt- oder Nebengurten von Rotorblättern, es können aber auch Stege gefertigt werden.

Üblicherweise werden zum Aufbau eines Gurtes des Rotorblattes einer Windenergieanlage mit ersten und zweiten Fließkanälen 26', 26 auf der ersten und zweiten Auflageseite 17, 20 versehene Pultrudatstreifen 1 gestapelt, indem erste und zweite Auflageseiten 17, 20 benachbarter Pultrudatstreifen 1 direkt aufeinandergelegt werden. Dabei haben die auf den beanchbarten Pultrudatstreifen 1 verbleibenden anderen Teile des Matrixmaterials 24, 24' direkten Kontakt miteinander. Durch die unterschiedliche Anordnung der ersten und zweiten Fließkanäle 26', 26 können die Fließkanäle 26, 26' nicht ineinander verhaken.

In diesem Ausführungsbeispiel sind die ersten Fließkanäle 26' exakt in Längsrichtung L angeordnet und die zweiten Fließkanäle 26 exakt senkrecht zur Längsrichtung L oder quer zur Richtung der ersten Fließkanäle 26' angeordnet. Es sind grundsätzlich auch relative Orientierungen der geraden Fließkanäle 26, 26' denkbar, es sind auch völlig andere Muster der Fließkanäle 26, 26' denkbar. Die Fließkanäle können geschwungen, wellenförmig oder gekrümmt ausgeführt sein, wobei ein Abreißgewebe 3, 5 mit exakt parallel und ausschließlich gerade geführten dicken Garnen 23, 23' besonders kostengünstig herstellbar ist. Insbesondere können das erste und das zweite Abreißgewebe 3, 5 aus derselben Abreißgewebebahn gefertigt werden, da das Abreißgewebe 3, 5 lediglich um 90° gedreht werden muss, um die Ausrichtung der ersten und der zweiten Fließkanäle 26', 26 gemäß Fig. 2 und Fig. 3 voneinander zu unterscheiden.

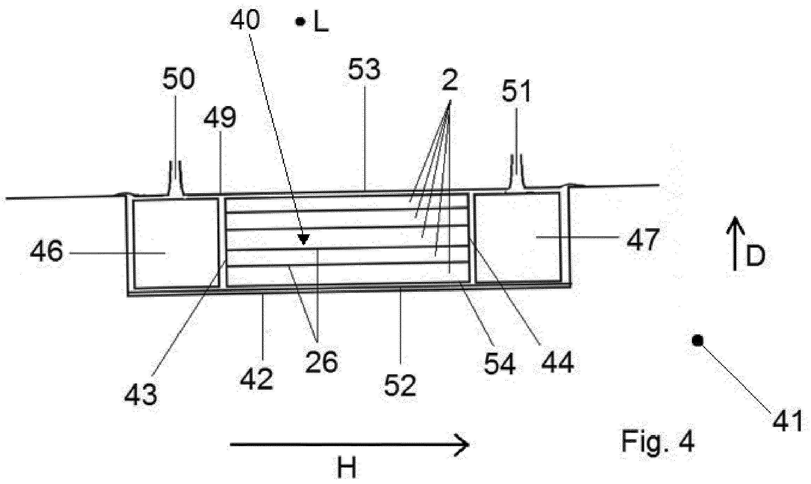

Fig. 4 zeigt eine Anordnung eines Gurthalbzeugs 40 mit gestapelten Pultrudatstreifen 1 in einer Fertigungsform 41.

Die Fertigungsform 41 weist eine Auflagefläche 42 auf, die die Außenkontur des herzustellenden Bauteils, insbesondere des Gurtes annimmt. Das Gurthalbzeug 40 in Fig. 4 nimmt bereits die Außenkontur des späteren Gurtes an. Das Gurthalbzeug 40 muss durch Harzinfusion aber noch zum Gurt verfestigt werden. Gurte sind entlang ihrer Längsrichtung L nicht exakt plan- und streifenförmig und weisen, durch die aerodynamische Form des Rotorblattes vorgegeben, zwar eine grundsätzlich streifenförmige Form auf, die jedoch in Längsrichtung L wellenartige Erhebungen bzw. Absenkungen aufweisen kann.

In Fig. 4 sind übereinandergeschichtete Pultrudatstreifen 1 dargestellt, die ein Gurthalbzeug 40 ausbilden. Entlang einer Höhe H des Gurthalbzeugs 40, die senkrecht zur Längsrichtung L des Gurthalbzeugs 40 verläuft, sind in Fig. 4 schematisch entlang der Höhe H verlaufende erste Fließkanäle 26 dargestellt, die zwischen einer ersten und einer zweiten schmalen Längsseite 43, 44 des Gurthalbzeugs 40 verlaufen und diese so miteinander harzleitend verbinden. Die ersten Fließkanäle 26 dienen dazu, das während eines Infusionsverfahrens zur Herstellung des Gurtes infundierte Harz zwischen den Pultrudatstreifen 11 hindurch von der ersten zur zweiten Längsseite 43, 44 zu leiten, um somit ein möglichst vollständiges Verkleben und auch Füllen der Zwischenräume zwischen den Pultrudatstreifen 1 mit flüssigem Harz zu ermöglichen. Das flüssige Harz ist üblicherweise ein Zweikomponentenharz, das sich während des Vakuuminfusionsverfahrens zunächst selbst erwärmt und nach Durchlaufen eines exothermen Peaks abkühlt. Damit das Harz vollständig aushärtet, wird ihm, nachdem der exotherme Peak durchlaufen ist, extern Wärme zugeführt. Durch die externe Wärmezufuhr härtet der Harz vollständig aus.

Fig. 4 zeigt eine Fertigungsform 41 zur Durchführung eines erfindungsgemäßen Vakuuminfusionsverfahrens. Das Gurthalbzeug 40 ist auf eine Auflagefläche 42 gelegt und entlang der ersten schmalen Längsseite 43 und entlang der zweiten schmalen Längsseite 44 sind erste Kernmaterialstreifen 46 bzw. zweite Kernmaterialstreifen 47 verlegt. Die beiden Kernmaterialstreifen 46, 47 weisen jeweils entlang ihrer dem Pultrudatstreifen 1 zugewandten Seite Fräsungen auf; das sind kleine Kanäle, die einen Durchtritt des flüssigen Harzes von der in Fig. 4 ersten zur zweiten Längsseite 43, 44 der Kernmaterialstreifen 46, 47 ermöglichen. Die Fräsung der Kernmaterialstreifen 46, 47 ermöglicht eine Verteilung des Harzmaterials entlang der Höhe H des Gurthalbzeugs 40.

Das in die Fertigungsform 41 eingelegte Gurthalbzeug 40 sowie die beiden Kernmaterialstreifen 46, 47 sind auf der auflagenflächenabseitigen Seite mit einer gasdichten Membran 49 abgedichtet. Die Membran 49 weist Einlassöffnungen 50 und Auslassöffnungen 51 auf. Durch die Einlassöffnungen 50 kann Harz durch Ausbildung eines Unterdrucks in den Bereich zwischen Membran 49 und Auflagefläche 42 eingesogen werden. Das Harz verteilt sich über die Fließkanäle 26 zwischen den Pultrudatstreifen 1 entlang der Höhe H und durch die Fräsung über die Kernmaterialstreifen 46, 47 auf die einzelnen Pultrudatstreifen 1. Günstigerweise liegt das Gurthalbzeug 40 auf einer Fließhilfe 52 auf, die einen Durchtritt des Harzes unterhalb des Gurthalbzeugs 40 von der ersten Längsseite 43 zur zweiten Längsseite 44 erleichtert.

Eine erste Gurthalbzeugaußenseite 53 sowie eine zweite Gurthalbzeugaußenseite 54 des Gurthalbzeugs 40 in Fig. 4 bleiben vom Abreißgewebe 3, 5 bedeckt. Das Abreißgewebe 3, 5 selbst ist nur geringfügig harzpermeabel. Dadurch wird ein Überschießen des Harzes über die Gurthalbzeugaußenseiten 53, 54 hinaus verhindert. Das auf den beiden Gurthalbzeugaußenseiten 53, 54 aufliegende Abreißgewebe 3, 5 kann nach der Infusion des Stapels der Pultrudatstreifen 1 mit Harz abgerissen werden oder auch auf dem fertigen Gurt verbleiben.

### Bezugszeichenliste

- 1: Pultrudatstreifen
- 2: Fasern / Armierungsmaterial
- 2a: Rolle
- 3: erstes Abreißgewebe
- 3a: Rolle
- 4: Injektionseinrichtung
- 5: zweites Abreißgewebe
- 5a: Rolle
- 6: Pultrudatbahn
- 7: Abzieher
- 8: Säge

- 17: erste Auflageseite
- 20: zweite Auflageseite

- 22: dünnes Garn
- 22': dünnes Garn
- 23: dickes Garn
- 23': dickes Garn
- 24: Matrixmaterial
- 24': Matrixmaterial
- 26: Fließkanäle
- 26': Fließkanäle

- 40: Gurthalbzeug
- 41: Fertigungsform
- 42: Auflagefläche
- 43: erste schmale Längsseite
- 44: zweite schmale Längsseite

- 46: Kernmaterialstreifen
- 47: Kernmaterialstreifen

- 49: gasdichte Membran
- 50: Einlassöffnungen
- 51: Auslassöffnungen
- 52: Fließhilfe
- 53: Gurthalbzeugaußenseite
- 54: Gurthalbzeugaußenseite

- B: Breite
- H: Höhe
- L: Länge/Längsrichtung

## Patentansprüche

1. Verfahren zur Fertigung eines Bauteils eines Rotorblattes, indem wenigstens ein Pultrudatstreifen (1) mit zwei sich gegenüberliegenden Auflageseiten (17, 20) an wenigstens einer der Auflageseiten (17, 20) mit einem Abreißgewebe (3, 5) beschichtet wird und
das Abreißgewebe (3, 5) von der wenigstens einen Auflageseite (17, 20) abgerissen wird und
Fließkanäle (26, 26') auf der wenigstens einen Auflageseite (17, 20) nach dem Abreißen des Abreißgewebes (3, 5) hinterlassen werden und
flüssiges Harz durch die Fließkanäle (26, 26') infundiert wird,
**dadurch gekennzeichnet, dass** das Abreißgewebe (3, 5) mit langgestreckten Erhebungen versehen wird, die langgestreckten Erhebungen des Abreißgewebes (3, 5) langgestreckte Fließkanäle (26, 26') in die wenigstens eine Auflageseite (17, 20) einformen und das Abreißgewebe (3, 5) mittels eines Matrixmaterials (24, 24') auf die Auflageseite (17, 20) laminiert wird und beim Abreißen einen Teil des Matrixmaterials (24, 24') abreißt und ein anderer Teil des Matrixmaterials (24, 24') auf der Auflageseite (17, 20) verbleibt und die Fließkanäle (25, 26') ausformt.

2. Bauteil eines Rotorblattes, das einen Pultrudatstreifen (1) mit zwei sich gegenüberliegenden Auflageseiten (17, 20) aufweist,
von denen wenigstens eine mit jeweils einem Abreißgewebe (3, 5) beschichtet ist, das Abreißgewebe (3, 5) von der wenigstens einen Auflageseite (17, 20) abreißbar ist, und das Fließkanäle (26, 26') auf der wenigstens einen Auflageseite (17, 20) nach dem Abreißen des Abreißgewebes (3, 5) hinterlässt, wobei
flüssiges Harz durch die Fließkanäle (26, 26') infundierbar ist,
**dadurch gekennzeichnet, dass** das Abreißgewebe (3, 5) mit langgestreckten Erhebungen versehen ist und die langgestreckten Erhebungen des Abreißgewebes (3, 5) dazu ausgebildet sind, um langgestreckte Fließkanäle (26, 26') in die wenigstens eine Auflageseite (17, 20) nach dem Abreißen des Abreißgewebes einzuformen und das Abreißgewebe (3, 5) mittels eines Matrixmaterials (24, 24') auf die Auflageseite (17, 20) laminiert ist und beim Abreißen einen Teil des Matrixmaterials (24, 24') abreißt und ein anderer Teil des Matrixmaterials (24, 24') auf der Auflageseite (17, 20) verbleibt und dazu ausgeformt ist, die Fließkanäle (25, 26') auszuformen.

## Claims

1. Method for manufacturing a component of a rotor blade, in which at least one pultrudate strip (1) with two opposing support faces (17, 20) is coated on at least one of the support faces (17, 20) with a peel ply (3, 5), the peel ply (3, 5) is peeled off from the at least one support face (17, 20), and flow channels (26, 26') are left behind on the at least one support face (17, 20) after the peel ply (3, 5) has been peeled off and liquid resin is infused through the flow channels (26, 26'), **characterised in that** the peel ply (3, 5) is provided with elongate raised portions, the elongate raised portions of the peel ply (3, 5) form elongate flow channels (26, 26') into the at least one support face (17, 20) and the peel ply (3, 5) is laminated by means of a matrix material (24, 24') onto the support face (17, 20) and peels off when a part of the matrix material (24, 24') peels off and another part of the matrix material (24, 24') remains on the support face (17, 20) and forms the flow channels (25, 26').

2. Component of a rotor blade, which has a pultrudate strip (1) with two opposing support faces (17, 20), of which at least one is coated with a peel ply (3, 5) in each case, the peel ply (3, 5) can be peeled off from the at least one support face (17, 20) and leaves flow channels (26, 26') behind on the at least one support face (17, 20) after the peel ply (3, 5) has been peeled off, and liquid resin can be infused through the flow channels (26, 26'), **characterised in that** the peel ply (3, 5) is provided with elongate raised portions and the elongate raised portions of the peel ply (3, 5) are designed to form elongate flow channels (26, 26') into the at least one support face (17, 20) after the peel ply peels off and the peel ply (3, 5) is laminated by means of a matrix material (24, 24') onto the support face (17, 20) and peels off when a part of the matrix material (24, 24') peels off and another part of the matrix material (24, 24') remains on the support face (17, 20) and is shaped to form the flow channels (25, 26').

## Revendications

1. Procédé pour la fabrication d'un composant d'une pale de rotor, au moins une bande de profilé pultrudé (1) avec deux côtés d'appui opposés (17, 20) étant revêtue d'un tissu déchirable (3, 5) sur au moins l'un des côtés d'appui (17, 20) et le tissu déchirable (3, 5) étant arraché du au moins un côté d'appui (17, 20) et des canaux d'écoulement (26, 26') étant laissés sur le au moins un côté d'appui (17, 20) après l'arrachement du tissu déchirable (3, 5) et de la résine liquide étant perfusée à travers les canaux d'écoulement (26, 26'),
**caractérisé en ce que** le tissu déchirable (3, 5) est pourvu de rehaussements étirés en longueur, les rehaussements étirés en longueur du tissu déchirable (3, 5) moulent des canaux d'écoulement étirés en longueur (26, 26') dans le au moins un côté d'appui (17, 20) et le tissu déchirable (3, 5) est laminé sur le côté d'appui (17, 20) au moyen d'un matériau de matrice (24, 24') et déchire, lors de l'arrachement, une partie du matériau de matrice (24, 24') et une autre partie du matériau de matrice (24, 24') reste sur le côté d'appui (17, 20) et façonne les canaux d'écoulement (25, 26).

2. Composant d'une pale de rotor qui présente une bande de profilé pultrudé (1) avec deux côtés d'appui opposés (17, 20) dont au moins l'un est revêtu de respectivement un tissu déchirable (3, 5), le tissu déchirable (3, 5) pouvant être arraché u au moins un côté d'appui (17, 20) et qui laisse des canaux d'écoulement (26, 26') sur le au moins un côté d'appui (17, 20) après l'arrachement du tissu déchirable (3, 5), cependant que de la résine liquide peut être perfusée à travers les canaux d'écoulement (26, 26'),
**caractérisé en ce que** le tissu déchirable (3, 5) est pourvu de rehaussements étirés en longueur, les rehaussements étirés en longueur du tissu déchirable (3, 5) sont configurés pour mouler des canaux d'écoulement étirés en longueur (26, 26') dans le au moins un côté d'appui (17, 20) après l'arrachement du tissu déchirable (3, 5) et le tissu déchirable (3, 5) est laminé sur le côté d'appui (17, 20) au moyen d'un matériau de matrice (24, 24') et déchire, lors de l'arrachement, une partie du matériau de matrice (24, 24') et une autre partie du matériau de matrice (24, 24') reste sur le côté d'appui (17, 20) et est façonner pour façonner les canaux d'écoulement (25, 26).
